# EUROPÄISCHE PATENTSCHRIFT

(11) **EP 3 857 684 B1**
(45) Veröffentlichungstag und Bekanntmachung des Hinweises auf die Patenterteilung: **10.07.2024**
(21) Anmeldenummer: 20734563.8
(22) Anmeldetag: 30.06.2020
(51) Int. Cl.: H02K 5/20, H02K 9/19

(54) **GEHÄUSELOSE ELEKTRISCHE TRAKTIONSMASCHINE**
HOUSINGLESS ELECTRIC TRACTION MACHINE
MACHINE DE TRACTION ÉLECTRIQUE SANS BOÎTIER

(30) Priorität: 27.09.2019 EP 19200030
(43) Veröffentlichungstag der Anmeldung: 04.08.2021
(73) Patentinhaber: Traktionssysteme Austria GmbH, 2351 Wiener Neudorf (AT)
(72) Erfinder: WILD, Stefan, 2351 Wiener Neudorf (AT); SAMSTAG, Philipp, 2351 Wiener Neudorf (AT)
(74) Vertreter: SONN Patentanwälte GmbH & Co KG
(86) Internationale Anmeldenummer: PCT/EP2020/068354
(87) Internationale Veröffentlichungsnummer: WO 2021/058152

(56) Entgegenhaltungen:
- EP-A2- 1 515 417
- CN-A- 1 937 365
- JP-A- 2005 333 795
- US-A1- 2003 222 519

## Beschreibung

Die Erfindung betrifft eine gehäuselose elektrische Traktionsmaschine, mit einem aus einem Statorblechpaket aufgebauten Stator und einer Rotorwelle mit einem darauf befestigten, aus einem Rotorblechpaket aufgebauten Rotor, wobei das Statorblechpaket zwischen zwei außenliegenden Pressplatten angeordnet ist, wobei außerhalb zumindest einer der Pressplatten ein jeweils ein Lager für die Rotorwelle aufweisendes Lagerschild angeordnet ist.

Die vorliegende Erfindung bezieht sich auf gehäuselose Traktionsmaschinen, also elektrische Antriebsmotoren, vorzugsweise für schienengebundene Fahrzeuge, wie Straßenbahnen oder Eisenbahnen.

Insbesondere bei Niederflurschienenfahrzeugen, welche ein bequemes Ein- und Aussteigen für die Passagiere ermöglichen, steht aufgrund des niedrigen Niveaus des Fußbodens nur sehr wenig Platz für das Fahrgestell, das Getriebe und die Antriebsmotoren zur Verfügung. Bei Schienenfahrzeugen können einzelne Räder oder Radsätze mit jeweils einem Motor angetrieben werden. Dementsprechend umfasst ein Fahrwerk mit vier Rädern üblicherweise zwei oder vier Antriebsmotoren. Da Schienenfahrzeuge meist für zwei Fahrtrichtungen ausgelegt werden, müssen die elektrischen Maschinen für beide Drehrichtungen ausgelegt werden.

Beispielsweise beschreibt die EP 0 548 044 B1 ein Schienenfahrzeug, dessen Drehgestell insbesondere für Niederflurschienenfahrzeuge mit geringer Fußbodenhöhe und somit beschränktem Platz für Fahrwerk, Getriebe und Antriebsmotoren ausgebildet ist. Dabei erfolgt der Antrieb vorzugsweise über Radnabenmotoren, welche direkt unter den Radkästen untergebracht werden.

Bekannte Niederflurschienenfahrzeuge weisen aufgrund der größeren Bauweise der Antriebsmotoren, Getriebe und Drehgestelle Bereiche mit höherer Fußbodenhöhe bzw. Bereiche, welche für die Fahrgäste nicht zur Verfügung stehen, auf, was natürlich Nachteile für die Personenbeförderung, insbesondere im urbanen Gebiet, mit sich bringt.

Neben der Konstruktion von elektrischen Maschinen, welche möglichst klein, aber dennoch möglichst leistungsstark ausgebildet sein sollen, stellt deren Kühlung eine große Herausforderung dar, da die Führung des Kühlfluids und die Abfuhr der Verlustwärme ebenfalls im begrenzten Raumangebot des Niederflurschienenfahrzeugs untergebracht werden muss. Dementsprechend werden Teile der Kühlsysteme auch häufig am Dach des Schienenfahrzeugs platziert.

Beispielsweise beschreibt die CN 1 937 365 A eine wassergekühlte, elektrische Traktionsmaschine für den Antrieb eines Schienenfahrzeugs, welche über ein Gehäuse verfügt und somit eine größere Bauform aufweist, als gehäuselose elektrische Maschinen.

Auch die EP 1 515 417 A2 beschreibt eine gekapselte elektrische Maschine mit entsprechend angeordneten Kühlkanälen zur Führung eines Kühlfluids, welche verschiedene Kühlkreisläufe bilden.

Schließlich beschreiben die US 2003/222519 A1 und die JP 2005 333795 A andere gekapselte elektrische Maschinen mit einer Kühlung über die Lagerschilde bzw. einer Luftkühlung, welche ebenfalls relativ große Bauform aufweisen.

Die Aufgabe der vorliegenden Erfindung besteht daher in der Schaffung einer oben genannten gehäuselosen elektrischen Traktionsmaschine, welche möglichst platzsparend, aber dennoch möglichst leistungsstark ausgebildet ist, sodass insbesondere eine Anwendung als Antriebsmaschine für Niederflurschienenfahrzeuge vorteilhaft ist. Nachteile bekannter elektrischer Maschinen sollen vermieden oder zumindest reduziert werden.

Gelöst wird die erfindungsgemäße Aufgabe dadurch, dass entlang eines Teils des Umfangs des Statorblechpakets und vom Statorblechpaket beabstandet zwischen den Pressplatten zumindest eine als Zugleiste zwischen den Pressplatten ausgebildete Abdeckung zur Bildung zumindest eines Kühlkastens mit einer Grundplatte an der Oberfläche des Statorblechpakets angeordnet ist, wobei der zumindest eine Zwischenraum zwischen der Grundplatte und der zumindest einen Abdeckung des Kühlkastens zur Führung eines Kühlfluids ausgebildet ist. Dadurch, dass nur entlang eines Teils des Umfangs des Statorblechpakets eine Abdeckung zur Bildung eines Kühlkastens angeordnet wird, resultiert eine Bauform der gehäuselosen elektrischen Traktionsmaschine, welche in einer Dimension, beispielsweise in der Höhe, geringere Abmessungen aufweist als in der anderen Dimension, beispielsweise der Breite. Somit kann eine gehäuselose elektrische Traktionsmaschine realisiert werden, die besonders platzsparend ist und sich somit für den Antrieb der Schienenräder einer Niederflurstraßenbahn besonders eignet. Dadurch, dass die zumindest eine Abdeckung zur Bildung des zumindest einen Kühlkastens gleichzeitig als Zugleiste zwischen den Pressplatten dient, können eigene Zugleisten unterbleiben, ohne dass die mechanische Festigkeit der Maschine verringert wird. Unterhalb des zumindest einen Kühlkastens ist an der Oberfläche des Statorblechpakets eine Grundplatte angeordnet, welche die Verbindung zur Oberfläche des darunterliegenden Teils des Statorblechpakets bildet. Daher soll eine möglichst gute Wärmeleitfähigkeit zur optimalen Abführung der Verlustwärme des Statorblechpakets über das Kühlfluid gegeben sein. Somit werden bei der erfindungsgemäßen elektrischen Maschine die Eigenschaften der Kühlung und der mechanischen Festigkeit vereint. Der zumindest eine Kühlkasten ist zur Führung eines Kühlfluids, also einer Kühlflüssigkeit oder eines Kühlgases, ausgebildet, sodass die beim Betrieb der elektrischen Maschine erzeugte Verlustwärme rasch abgeführt werden kann und eine Überhitzung der elektrischen Maschine wirkungsvoll verhindert werden kann. Sofern mehrere Kühlkästen vorgesehen sind, können diese in Serien- oder Parallelschaltung mit dem Kühlfluid versorgt werden. Allfällige Verbindungsleitungen zwischen den Kühlkästen für das Kühlfluid können bereits in der Konstruktion der elektrischen Maschine integriert sein. Eine Serienschaltung der Kühlkästen kann auch über mehrere elektrische Motoren hinweg erfolgen. Aufgrund der geringen Baugröße der elektrischen Maschine und der niedrigen bewegten Massen des Rotors können besonders hohe Drehzahlen, beispielsweise bis über 12.000 min⁻¹, erreicht werden. Die elektrische Maschine ist vorzugsweise als Asynchronmaschine oder permanentmagneterregte Synchronmaschine ausgeführt. Im Besonderen kann die elektrische Maschine bei Niederflurschienenfahrzeugen so angeordnet werden, dass die Rotorwelle unterhalb der Drehachse des anzutreibenden Schienenrads angeordnet ist. Dies ist aufgrund der geringen Baugröße der elektrischen Maschine möglich und führt zu verbesserten räumlichen Eigenschaften und somit einer niedrigeren erreichbaren Fußbodenhöhe im Schienenfahrzeug.

Vorteilhafterweise sind zwei Kühlkästen über jeweils einen Umfangswinkel von 60° bis 135°, vorzugsweise von jeweils im Wesentlichen 90°, symmetrisch zueinander angeordnet. Bei der Anordnung zweier Kühlkästen über einen derartigen Umfangswinkel resultiert eine besonders niedrige Bauform der elektrischen Maschine. Die symmetrische Anordnung zweier Kühlkästen verbessert die Kühlwirkung.

Im Zwischenraum jedes Kühlkastens können Stege und in zumindest einer Pressplatte zumindest ein Einlass und zumindest ein Auslass für das Kühlfluid angeordnet sein, zur mäanderförmigen Führung des Kühlfluids zwischen den Stegen im Zwischenraum. Durch diese einfache und kostengünstig realisierbare Maßnahme resultiert eine verbesserte Wärmeabfuhr und somit eine optimale Kühlung der elektrischen Maschine, wodurch trotz der geringen Baugröße hohe Leistungsdichten erzielbar sind.

In einer Pressplatte können Öffnungen für das Kühlfluid angeordnet sein. Dadurch kann auch der Bereich außerhalb der Pressplatte, wo sich üblicherweise die Wickelköpfe der Statorwicklung befinden, ebenfalls in geeigneter Weise über das Kühlfluid gekühlt werden.

Außerhalb der Pressplatte mit den Öffnungen für das Kühlfluid kann eine Umlenkeinrichtung für das Kühlfluid angeordnet sein. Diese Umlenkeinrichtung kann durch eine Art Deckel, der mit der Pressplatte verbunden, vorzugsweise verschweißt, wird, gebildet sein. Somit wird das Kühlfluid vom Kühlkasten auch in Bereiche außerhalb der Pressplatte gelenkt und es werden auch diese Bereiche entsprechend gekühlt.

Die Grundplatte des Kühlkastens besteht vorzugsweise aus einem Material, welches für eine stoffschlüssige Verbindung mit dem Statorblechpaket entsprechend verarbeitet werden kann, beispielsweise Schweiß- oder Klebeeignung besitzt, gute Wärmeleitfähigkeit aufweist und die notwendigen mechanischen Anforderungen erfüllt. Beispielsweise kann die Grundplatte aus Baustahl bestehen.

Die Grundplatte ist mit dem Statorblechpaket vorzugsweise zumindest stellenweise stoffschlüssig verbunden, um eine optimale thermische Anbindung des Kühlkastens zum Statorblechpaket zu erzielen. Als Verbindungsmethoden eignen sich insbesondere Schweißverfahren oder auch Klebeverfahren.

Ebenso kann die Grundplatte mit dem Statorblechpaket auch zumindest stellenweise formschlüssig verbunden sein. Bei dieser Ausführungsvariante wird die Grundplatte so gestaltet und verarbeitet, dass im Zuge der Herstellung eine Art Formschluss zwischen der Oberfläche des Statorblechpakets und der Grundplatte zustande kommt. Dies kann beispielsweise mit Hilfe einer Schweißverbindung am Umfang der Grundplatte oder bei geteilter Grundplatte erfolgen. Der Formschluss wird hier durch den thermischen Verzug auf Grund der Wärmeeinbringung eines entsprechend gesteuerten Schweißprozesses erreicht.

Für eine Verbesserung der Wärmeabfuhr kann die Grundplatte Öffnungen aufweisen. Diese Öffnungen können beispielsweise in Form von Langlöchern vorliegen, aber prinzipiell beliebige Gestalt aufweisen.

Alternativ kann die Grundplatte auch ohne Öffnungen ausgeführt werden und zwischen der Grundplatte und der Oberfläche des Statorblechpakets eine Wärmeleitfolie angeordnet werden. Dadurch können Unebenheiten und Toleranzen zwischen dem Statorblechpaket und der Grundplatte ausgeglichen und ein besserer thermischer Kontakt zwischen dem Kühlfluid im Kühlkasten und dem Stator der elektrischen Maschine erzielt werden. Dabei wird die Grundplatte vorzugsweise seitlich oder über den gesamten Umfang mit der Oberfläche des Statorblechpakets verbunden, insbesondere verschweißt, und dazwischen die Wärmeleitfolie angeordnet. Die Wärmeleitfolie besteht aus einem Material mit entsprechend guter Wärmeleitung und einer möglichst guten Formanpassung bzw. sogenannter "Gap-Filler"-Eigenschaft. Beispielsweise können die Wärmeleitfolien aus einem elastomeren Schaumstoff oder einer Silikonfolie mit Glasfaserverstärkung gebildet werden.

Die Pressplatten sind im Wesentlichen rechteckig ausgebildet. Dadurch ist die elektrische Maschine besonders platzsparend und eignet sich speziell zur Anwendung als Antriebsmotor bei Niederflurschienenfahrzeugen.

Das Kühlfluid ist vorzugsweise durch Kühlwasser, das allenfalls mit geeigneten Zusätzen versehen ist, gebildet. Theoretisch sind auch Kühlgase denkbar. Über entsprechende Leitungen wird das Kühlfluid zu dem oder den Kühlkästen jeder elektrischen Maschine geleitet und die in der elektrischen Maschine erzeugte Wärme über Wärmetauscher, die beispielsweise am Dach eines Niederflurschienenfahrzeugs angeordnet sein können, abgeführt. Die einzelnen Kühlkästen verschiedener elektrischer Maschinen können in Serie zusammengeschaltet werden, um möglichst kurze Verbindungsleitungen für das Kühlfluid zwischen den elektrischen Maschinen zu erzielen.

An der Antriebsseite der Rotorwelle der gehäuselosen elektrischen Traktionsmaschine kann eine Kupplung zur Verbindung mit einem Getriebe angeordnet sein. Dabei eignet sich beispielsweise eine Bogenzahnkupplung besonders, um etwaige Relativbewegungen zwischen der elektrischen Maschine und dem Getriebe auszugleichen. Andere Ausführungsformen sehen elektrische Maschinen mit nur einer Lagerstelle der Rotorwelle in der elektrischen Maschine selbst und einer zweiten Lagerung mithilfe einer Membrankupplung im Getriebe vor. Weiters kann die Rotorwelle der elektrischen Maschine zusammen mit der Ritzelwelle eines Getriebes in einem Bauteil vereint werden.

Das zumindest eine Lager für die Lagerung der Rotorwelle in dem zumindest einen Lagerschild kann durch ein Schrägkugellager gebildet sein. Derartige an sich bekannte Kugellager eignen sich für die Lagerung der Rotorwelle der elektrischen Maschine besonders, da diese Lager besonders gute Laufeigenschaften im oberen Drehzahlbereich aufweisen.

Wenn im Rotorblechpaket zumindest ein Wärmerohr mit freiem Ende oder in Verbindung mit einem Kühlkörper angeordnet ist, kann der Rotor der elektrischen Maschine zusätzlich gekühlt werden. Derartige sog. "Heatpipes" sind metallene Gefäße länglicher Form, welche ein hermetisch gekapseltes Volumen enthalten, in dem ein Arbeitsmedium, z.B. Wasser oder Ammoniak, enthalten ist, welches das Volumen zu einem kleinen Teil in flüssigem, zum größeren Teil in gasförmigem Zustand ausfüllt. Unter Nutzung der Verdampfungswärme des Mediums können große Wärmemengen auf kleiner Querschnittsfläche transportiert werden. Auf diese Weise kann der Rotor über das zumindest eine Wärmerohr gekühlt werden, indem die Wärme zum freien Ende des Wärmerohrs transportiert wird und dort allenfalls von einem Kühlkörper abgeführt wird.

Die Höhe der gehäuselosen elektrischen Traktionsmaschine liegt vorzugsweise in einem Bereich zwischen 60 mm und 300 mm, die Breite zwischen 60 mm und 300 mm und die Länge zwischen 110 mm und 1000 mm beträgt. Derartige Dimensionen eignen sich insbesondere für die Anwendung der elektrischen Maschine als Antriebsmotor bei Niederflurschienenfahrzeugen.

Die Rotorwelle weist vorzugsweise einen Durchmesser von 20 mm bis 100 mm und eine Länge zwischen 100 mm und 980 mm auf. Diese Dimensionen eignen sich insbesondere für einen Antriebsmotor bei Schienenfahrzeugen, insbesondere Niederflurfahrzeugen.

Die vorliegende Erfindung wird anhand der beigefügten Zeichnungen näher erläutert. Darin zeigen:
- Fig. 1: eine perspektivische Prinzipdarstellung einer erfindungsgemäßen gehäuselosen elektrischen Traktionsmaschine;
- Fig. 2: eine weitere perspektivische Ansicht einer erfindungsgemäßen gehäuselosen elektrischen Traktionsmaschine;
- Fig. 3: eine teilweise geschnittene Seitenansicht der gehäuselosen elektrischen Traktionsmaschine gemäß Fig. 2;
- Fig. 4: ein Schnitt durch die gehäuselose elektrische Traktionsmaschine gemäß Fig. 3 entlang der Schnittlinie IV- IV;
- Fig. 5: ein Schnitt durch die gehäuselose elektrische Traktionsmaschine gemäß Fig. 4 entlang der Schnittlinie V - V;
- Fig. 6a bis 6c: verschiedene Formen von Grundplatten zur Bildung der Kühlkästen in Draufsicht und Seitenansicht; und
- Fig. 7: eine perspektivische Prinzipdarstellung einer mit einem Getriebe verbundenen gehäuselosen elektrischen Traktionsmaschine.

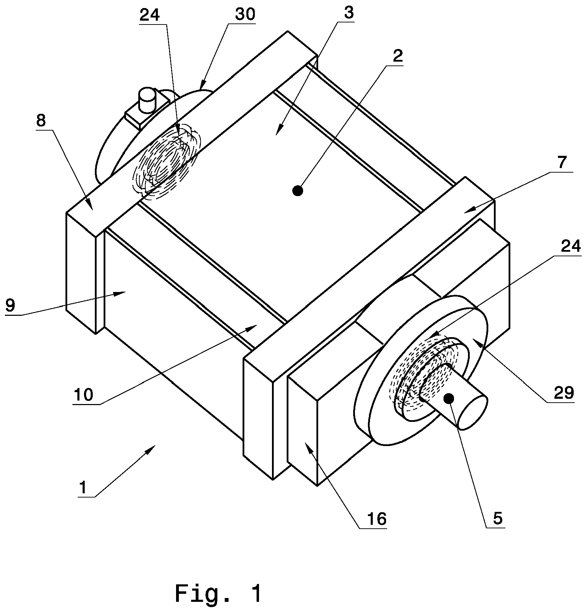

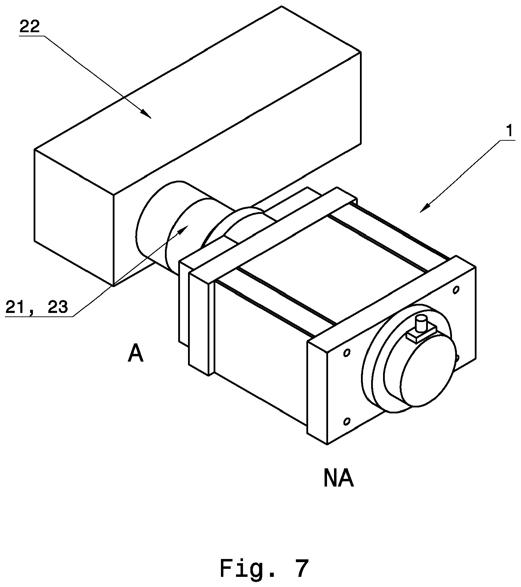

Fig. 1 zeigt eine perspektivische Prinzipdarstellung einer erfindungsgemäßen gehäuselosen elektrischen Traktionsmaschine 1. Die als Innenläufer ausgeführte elektrische Traktionsmaschine 1 besteht aus einem Stator 2, der aus einem entsprechenden Statorblechpaket 3 aufgebaut ist, und einem beweglichen Teil, dem Rotor 5, der aus einer Rotorwelle 4 und einem darauf befestigten Rotorblechpaket 6 aufgebaut ist. Das Statorblechpaket 3 des Stators 2 ist zwischen zwei außenliegenden Pressplatten 7 und 8 angeordnet. Außerhalb der Pressplatten 7 und 8 befindet sich jeweils ein Lagerschild 29 und 30, welches entsprechende Lager 24 (strichliert eingezeichnet) für die Lagerung der Rotorwelle 4 aufweisen. Die elektrische Traktionsmaschine 1 kann auch nur ein Lager 24 in einem Lagerschild 29 oder 30 beinhalten und das zweite Lager für die Rotorwelle 4 kann auch in einer Kupplung 21 oder einem Getriebe 22 (siehe Fig. 7) integriert sein.

Erfindungsgemäß ist entlang eines Teils des Umfangs des Statorblechpakets 3 und vom Statorblechpaket 3 beabstandet zwischen den Pressplatten 7 und 8 zumindest eine als Zugleiste zwischen den Pressplatten 7 und 8 ausgebildete Abdeckung 9 zur Bildung eines Kühlkastens 10 angeordnet. Im dargestellten Ausführungsbeispiel sind zwei Kühlkästen 10 durch zwei als Zugleisten ausgebildete Abdeckungen 9 gebildet. Im Zwischenraum 11 zwischen dem Statorblechpaket 3 und der jeweiligen Abdeckung 9 jedes Kühlkastens 10 kann ein Kühlfluid K geführt werden, um die in der elektrischen Traktionsmaschine 1 erzeugte Wärme abführen zu können.

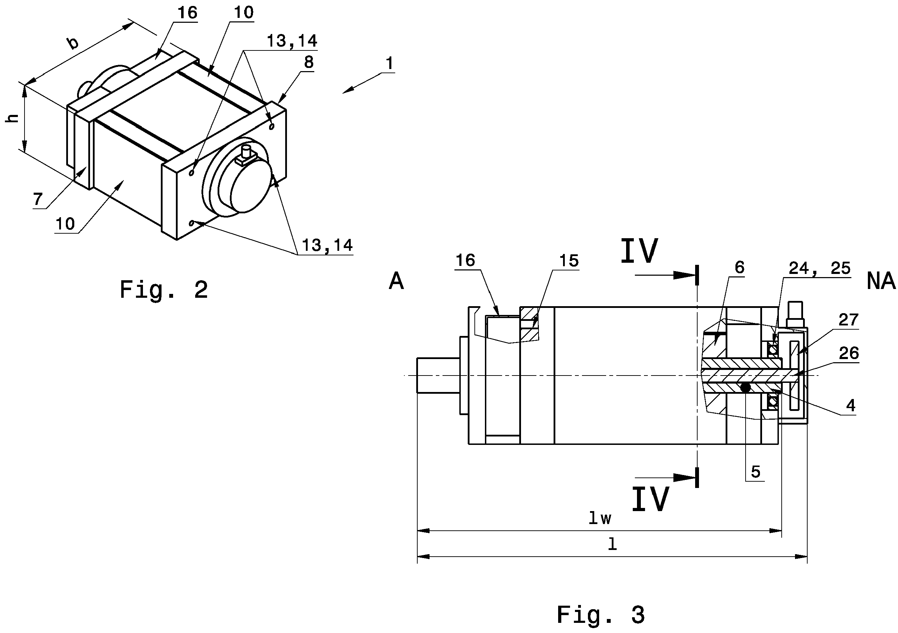

Fig. 2 zeigt eine weitere perspektivische Prinzipdarstellung einer erfindungsgemäßen gehäuselosen elektrischen Traktionsmaschine 1. Erfindungsgemäß resultiert eine elektrische Traktionsmaschine 1, welche eine gegenüber der Breite b verringerte Höhe h aufweist. Über entsprechende Einlässe 13 und Auslässe 14 in der Pressplatte 7 und/oder 8 kann das Kühlfluid K in den Kühlkasten 10 und aus dem Kühlkasten 10 heraus gefördert werden. Beispielsweise befindet sich je Kühlkasten 10 ein Einlass 13 für das Kühlfluid K und ein Auslass 14 für das Kühlfluid K in der Pressplatte 7 oder 8. In der gegenüberliegenden Pressplatte 8 oder 7 können Öffnungen 15 für das Kühlfluid K angeordnet sein, wo das Kühlfluid K aus dem Kühlkasten 10 geführt und wieder in diesen hinein geleitet wird. Entsprechende Umlenkeinrichtungen 16 dienen der Umleitung des Kühlfluids K außerhalb der Pressplatte 8 bzw. 7.

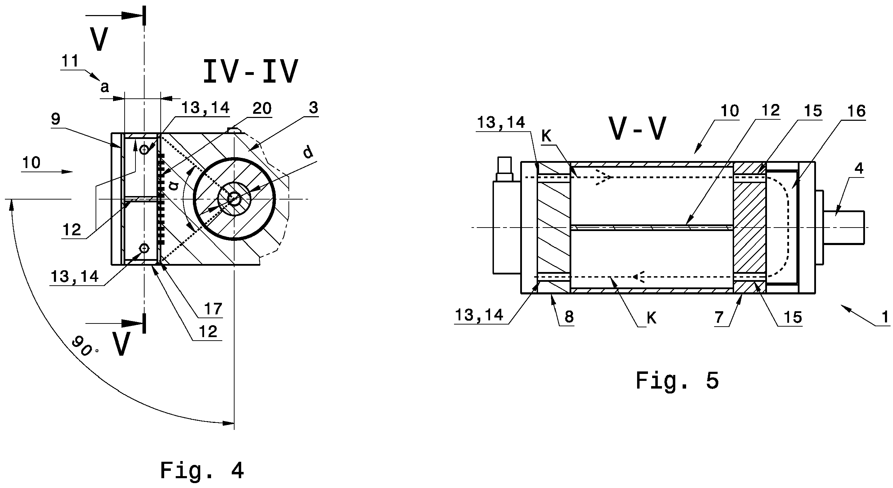

In Fig. 3 ist eine teilweise geschnittene Darstellung der gehäuselosen elektrischen Traktionsmaschine 1 gemäß Fig. 2 gezeigt. Hier ist der aus Rotorwelle 4 und Rotorblechpaket 6 bestehende Rotor 5 der elektrischen Traktionsmaschine 1 dargestellt. Über die Öffnung 15 gelangt das Kühlfluid K aus dem Kühlkasten 10 in die Umlenkeinrichtung 16, wo das Kühlfluid K über eine weitere Öffnung 15 wieder in den Kühlkasten 10 geführt wird (siehe auch Fig. 5). In der Rotorwelle 4 kann ein Wärmerohr 26 angeordnet sein, dessen freies Ende mit einem Kühlkörper 27 verbunden sein kann. Die Länge l_{w} der Rotorwelle 4 kann zwischen 100 mm und 980 mm betragen. Die Länge l der gesamten elektrischen Maschine beispielsweise zwischen 110 mm und 1000 mm. An der Nichtantriebsseite NA der elektrischen Traktionsmaschine 1 kann ein Drehgeber (nicht dargestellt) angeordnet sein, der zur Regelung der Umdrehungszahl verwendet werden kann. Eine Zahnscheibe, welche die Signale für einen solchen Drehgeber erzeugt, könnte als Kühlkörper 27 für das Wärmerohr 26 verwendet werden.

Fig. 4 zeigt das Schnittbild durch die gehäuselose elektrische Traktionsmaschine 1 gemäß Fig. 3 entlang der Schnittlinie IV - IV. Aus diesem Schnittbild ist ein Kühlkasten 10 mit dem Einlass 13, Auslass 14 und einem Steg 12 ersichtlich. Über eine Wärmeleitfolie 20 wird die Wärme des Statorblechpakets 3 und die Grundplatte 17 an das Kühlfluid K im Kühlkasten 10 abgegeben und entsprechend abgeführt. Die Abdeckung 9 zur Bildung des Kühlkastens 10 ist gleichzeitig als Zugleiste zwischen den Pressplatten 7, 8 der elektrischen Traktionsmaschine 1 ausgebildet. Im dargestellten Ausführungsbeispiel erstreckt sich der Kühlkasten 10 über einen Umfangswinkel α von etwas weniger als 90°. Der Abstand a zwischen Abdeckung 9 und Statorblechpaket 3 beträgt vorzugsweise 6 mm bis 60 mm. Der Durchmesser d der Rotorwelle 4 beträgt beispielsweise 20 mm bis 100 mm.

Fig. 5 zeigt das Schnittbild durch die gehäuselose elektrische Traktionsmaschine 1 gemäß Fig. 4 entlang der Schnittlinie V - V. Das Kühlfluid K gelangt über den Einlass 13 in einen Teilraum des Kühlkastens 10, der durch den Steg 12 vom weiteren Teilraum abgetrennt ist. Über eine Öffnung 15 in der Pressplatte 8 gelangt das Kühlfluid K auch in den Bereich außerhalb des Kühlkastens 10, um dort beispielsweise die Wickelköpfe zusätzlich kühlen zu können. Über eine Umlenkeinrichtung 16, welche in Form eines an der Pressplatte 8 angeordneten und mit dieser verschweißten deckelartigen Konstruktion gebildet ist, wird das Kühlfluid K über eine weitere Öffnung 15 in der Pressplatte 8 in den unteren Teil des Kühlkastens 10 geführt und über den Auslass 14 in der Pressplatte 7 aus der elektrischen Traktionsmaschine 1 geleitet.

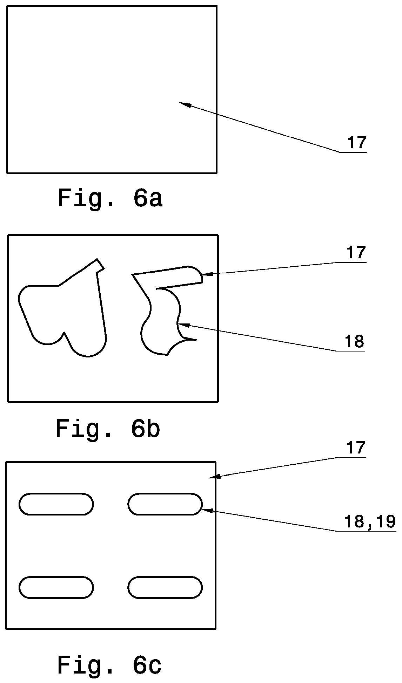

Fig. 6a bis 6c zeigen verschiedene Formen von Grundplatten 17 zur Bildung der Kühlkästen 10 in Draufsicht und Seitenansicht. Die Fig. 6a, 6b und 6c zeigen verschiedene Ausführungsformen einer Grundplatte 17, die auf die Oberseite des Statorblechpakets 3 angeordnet und mit dieser beispielsweise stoffschlüssig verbunden, insbesondere verschweißt wird. Gemäß Fig. 6a ist die Grundplatte 17 vollflächig ausgebildet. Gemäß Fig. 6b sind in der Grundplatte 17 Öffnungen 18 in beliebiger Form vorgesehen. Bei der Variante gemäß Fig. 6c befinden sich in der Grundplatte 17 Öffnungen 18 in Form von Langlöchern 19. Bei der Verbindung der Grundplatte 17 mit der Oberfläche des Statorblechpakets 3 erfolgt eine stoffschlüssige Verbindung, vorzugsweise am Umfang der Grundplatte und am Umfang der Öffnungen 18 bzw. Langlöchern 19. Anstelle einer stoffschlüssigen Verbindung kann die Grundplatte 17 mit dem Statorblechpaket 3 auch zumindest teilweise formschlüssig verbunden werden.

Schließlich ist in Fig. 7 eine perspektivische Prinzipdarstellung einer mit einem Getriebe 22 verbundenen gehäuselosen elektrischen Traktionsmaschine 1 wiedergegeben. An der Antriebsseite A der Rotorwelle 4 kann eine Kupplung 21 zur Verbindung mit einem Getriebe 22 vorgesehen sein. Die Kupplung 21 kann beispielsweise durch eine Bogenzahnkupplung 23 realisiert werden.

## Patentansprüche

1. Gehäuselose, elektrische Traktionsmaschine (1), mit einem aus einem Statorblechpaket (3) aufgebauten Stator (2) und einer Rotorwelle (4) mit einem darauf befestigten, aus einem Rotorblechpaket (6) aufgebauten Rotor (5), wobei das Statorblechpaket (3) zwischen zwei außenliegenden Pressplatten (7, 8) angeordnet ist, wobei außerhalb zumindest einer der Pressplatten (7, 8) ein jeweils ein Lager (24) für die Rotorwelle (4) aufweisendes Lagerschild (29, 30) angeordnet ist, **dadurch gekennzeichnet, dass** entlang eines Teils des Umfangs des Statorblechpakets (3) und vom Statorblechpaket (3) beabstandet zwischen den Pressplatten (7, 8) zumindest eine als Zugleiste zwischen den Pressplatten (7, 8) ausgebildete Abdeckung (9) zur Bildung zumindest eines Kühlkastens (10) mit einer Grundplatte (17) an der Oberfläche des Statorblechpakets (3) angeordnet ist, wobei der zumindest eine Zwischenraum (11) zwischen der Grundplatte (17) und der zumindest einen Abdeckung (9) des Kühlkastens (10) zur Führung eines Kühlfluid (K) ausgebildet ist.

2. Gehäuselose, elektrische Traktionsmaschine (1) nach Anspruch 1, **dadurch gekennzeichnet, dass** zwei Kühlkästen (10) über jeweils einen Umfangswinkel (α) von 60° bis 135°, vorzugsweise von im Wesentlichen 90°, angeordnet sind.

3. Gehäuselose, elektrische Traktionsmaschine (1) nach Anspruch 1 oder 2, **dadurch gekennzeichnet, dass** im Zwischenraum (11) jedes Kühlkastens (10) Stege (12) und in zumindest einer Pressplatte (7, 8) zumindest ein Einlass (13) und zumindest ein Auslass (14) für das Kühlfluid (K) angeordnet sind, zur mäanderförmigen Führung des Kühlfluids (K) zwischen den Stegen (12) im Zwischenraum (11).

4. Gehäuselose, elektrische Traktionsmaschine (1) nach einem der Ansprüche 1 bis 3, **dadurch gekennzeichnet, dass** in einer Pressplatte (7, 8) Öffnungen (15) für das Kühlfluid (K) angeordnet sind.

5. Gehäuselose, elektrische Tranktionsmaschine (1) nach Anspruch 4, **dadurch gekennzeichnet, dass** außerhalb der Pressplatte (7, 8) mit den Öffnungen (15) für das Kühlfluid (K) eine Umlenkeinrichtung (16) für das Kühlfluid (K) angeordnet ist.

6. Gehäuselose, elektrische Traktionsmaschine (1) nach einem der Ansprüche 1 bis 5, **dadurch gekennzeichnet, dass** die Grundplatte (17) mit dem Statorblechpaket (3) zumindest stellenweise stoffschlüssig verbunden, vorzugsweise verschweißt, ist.

7. Gehäuselose, elektrische Traktionsmaschine (1) nach einem der Ansprüche 1 bis 5, **dadurch gekennzeichnet, dass** die Grundplatte (17) mit dem Statorblechpaket (3) zumindest stellenweise formschlüssig verbunden ist.

8. Gehäuselose, elektrische Traktionsmaschine (1) nach einem der Ansprüche 1 bis 7, **dadurch gekennzeichnet, dass** die Grundplatte (17) Öffnungen (18), vorzugsweise in Form von Langlöchern (19), aufweist.

9. Gehäuselose, elektrische Traktionsmaschine (1) nach einem der Ansprüche 1 bis 7, **dadurch gekennzeichnet, dass** zwischen Grundplatte (17) und Statorblechpaket (3) eine Wärmeleitfolie (20) angeordnet ist.

10. Gehäuselose, elektrische Traktionsmaschine (1) nach einem der Ansprüche 1 bis 9, **dadurch gekennzeichnet, dass** die Pressplatten (7, 8) im Wesentlichen rechteckig ausgebildet sind.

11. Gehäuselose, elektrische Traktionsmaschine (1) nach einem der Ansprüche 1 bis 10, **dadurch gekennzeichnet, dass** das Kühlfluid (K) durch Kühlwasser gebildet ist.

12. Gehäuselose, elektrische Traktionsmaschine (1) nach einem der Ansprüche 1 bis 11, **dadurch gekennzeichnet, dass** an der Antriebsseite (A) der Rotorwelle (4) eine Kupplung (21) zur Verbindung mit einem Getriebe (22), vorzugsweise eine Bogenzahnkupplung (23), angeordnet ist.

13. Gehäuselose, elektrische Traktionsmaschine (1) nach einem der Ansprüche 1 bis 12, **dadurch gekennzeichnet, dass** das zumindest eine Lager (24) in dem zumindest einen Lagerschild (29, 30) durch ein Schrägkugellager (25) gebildet ist.

14. Gehäuselose, elektrische Traktionsmaschine (1) nach einem der Ansprüche 1 bis 13, **dadurch gekennzeichnet, dass** im Rotorblechpaket (6) zumindest ein Wärmerohr (26) mit freiem Ende oder in Verbindung mit einem Kühlkörper (27) zur Kühlung des Rotors (3) angeordnet ist.

## Claims

1. Unenclosed electric traction machine (1), with a stator (2) built up from a stator laminated core (3), and a rotor shaft (4) with a rotor (5), mounted on the latter, built up from a rotor laminated core (6), wherein the stator laminated core (3) is arranged between two outer pressing plates (7, 8), wherein a bearing shield (29, 30), which in each case has a bearing (24) for the rotor shaft (4), is arranged outside at least one of the pressing plates (7, 8), **characterised in that**, along a section of the periphery of the stator laminated core (3), and spaced apart from the stator laminated core (3), at least one cover (9), designed as a tension bar between the pressing plates (7, 8), is arranged between the pressing plates (7, 8) so as to form at least one cooling box (10), with a base (17) on the surface of the stator laminated core (3), wherein
the at least one intermediate space (11) between the base (17) and the at least one cover (9) of the cooling box (10) is designed for the routeing of a cooling fluid (K).

2. Unenclosed electric traction machine (1) according to Claim 1, **characterised in that**, two cooling boxes (10) are arranged in each case over a circumferential angle (α) of 60° to 135°, preferably of essentially 90°.

3. Unenclosed electric traction machine (1) according to Claim 1 or 2, **characterised in that**, webs (12) are arranged in the intermediate space (11) of each cooling box (10), and at least one inlet (13) and at least one outlet (14) for the cooling fluid (K) are arranged in at least one pressing plate (7, 8), for the meandering routeing of the cooling fluid (K) between the webs (12) in the intermediate space (11).

4. Unenclosed electric traction machine (1) according to one of the Claims 1 to 3, **characterised in that**, openings (15) for the cooling fluid (K) are arranged in a pressing plate (7, 8).

5. Unenclosed electric traction machine (1) according to Claim 4, **characterised in that**, a deflection device (16) for the cooling fluid (K) is arranged outside the pressing plate (7, 8) with the openings (15) for the cooling fluid (K).

6. Unenclosed electric traction machine (1) according to one of the Claims 1 to 5, **characterised in that**, the base (17) is connected, preferably welded, to the stator laminated core (3), at least at some places.

7. Unenclosed electric traction machine (1) according to one of the Claims 1 to 5, **characterised in that**, the base (17) is connected by means of a form fit to the stator laminated core (3), at least at some places.

8. Unenclosed electric traction machine (1) according to one of the Claims 1 to 7, **characterised in that**, the base (17) has openings (18), preferably in the form of elongated holes (19).

9. Unenclosed electric traction machine (1) according to one of the Claims 1 to 7, **characterised in that**, a heat conducting membrane (20) is arranged between the base (17) and the stator laminated core (3).

10. Unenclosed electric traction machine (1) according to one of the Claims 1 to 9, **characterised in that** the pressing plates (7, 8) are designed to be essentially rectangular.

11. Unenclosed electric traction machine (1) according to one of the Claims 1 to 10, **characterised in that**, the cooling fluid (K) takes the form of cooling water.

12. Unenclosed electric traction machine (1) according to one of the Claims 1 to 11, **characterised in that**, a coupling (21) for connection to a transmission (22), preferably a curved-tooth coupling (23), is arranged on the drive side (A) of the rotor shaft (4) .

13. Unenclosed electric traction machine (1) according to one of the Claims 1 to 12, **characterised in that**, the at least one bearing (24) in the at least one bearing shield (29, 30) takes the form of an angular contact ball bearing (25).

14. Unenclosed electric traction machine (1) according to one of the Claims 1 to 13, **characterised in that**, at least one heat pipe (26), with a free end, or connected to a heat sink (27), is arranged in the rotor laminated core (6), for purposes of cooling the rotor (3).

## Revendications

1. Machine à traction électrique (1) sans boîtier, dotée d'un stator (2) construit à partir d'un empilage de tôles statoriques (3) et d'un arbre de rotor (4) sur lequel est fixé un rotor (5) construit à partir d'un empilage de tôles rotoriques (6), l'empilage de tôles statoriques (3) étant agencé entre deux plaques de pressage externes (7, 8), un flasque (29, 30) comportant un palier (24) pour l'arbre de rotor (4) étant agencé à l'extérieur d'au moins une des plaques de pressage (7, 8), **caractérisée en ce que** au moins un couvercle (9) formé comme une barre de traction entre les plaques de pressage (7, 8) est utilisé le long d'une partie de la périphérie de l'empilage de tôles statoriques (3) et avec un espacement par rapport l'empilage de tôles statoriques (3) entre les plaques de pressage (7, 8) pour former au moins un caisson de refroidissement (10) avec une plaque de base (17) agencée sur la surface de l'empilage de tôles statoriques (3), au moins un interstice (11) entre la plaque de base (17) et au moins un couvercle (9) du caisson de refroidissement (10) étant formés pour guider un fluide de refroidissement (K).

2. Machine à traction électrique (1) sans boîtier selon la revendication 1, **caractérisée en ce que** deux caissons de refroidissement (10) sont agencées chacun sur un angle circonférentiel (α) de 60° à 135°, de préférence 90° pour l'essentiel.

3. Machine à traction électrique (1) sans boîtier selon la revendication 1 ou 2, **caractérisée en ce que** dans l'interstice (11) de chaque caisson de refroidissement (10), des entretoises (12) et au moins une entrée (13) et au moins une sortie (14) pour le fluide de refroidissement (K) sont agencées sur au moins une plaque de pressage (7, 8), pour le guidage sinueux du fluide de refroidissement (K) entre les entretoises (12) dans l'interstice (11).

4. Machine à traction électrique (1) sans boîtier selon l'une des revendications 1 à 3, **caractérisée en ce que** des ouvertures (15) pour le fluide de refroidissement (K) sont agencées dans une plaque de pressage (7, 8).

5. Machine à traction électrique sans boîtier (1) selon la revendication 4, **caractérisée en ce qu'**un dispositif de renvoi (16) du fluide de refroidissement (K) est agencé à l'extérieur de la plaque de pressage (7, 8) avec les ouvertures (15) pour le liquide de refroidissement (K).

6. Machine à traction électrique (1) sans boîtier selon l'une des revendications 1 à 5, **caractérisée en ce que** la plaque de base (17) est reliée par combinaison de matières, et de préférence soudée, au moins par endroits, à l'empilage de tôles statoriques (3).

7. Machine à traction électrique (1) sans boîtier selon l'une des revendications 1 à 5, **caractérisée en ce que** la plaque de base (17) est reliée par complémentarité de formes, au moins par endroits, à l'empilage de tôles statoriques (3).

8. Machine à traction électrique (1) sans boîtier selon l'une des revendications 1 à 7, **caractérisée en ce que** la plaque de base (17) présente des ouvertures (18), de préférence sous forme de trous oblongs (19).

9. Machine à traction électrique (1) sans boîtier selon l'une des revendications 1 à 7, **caractérisée en ce qu'**un film thermoconducteur (20) est agencé entre la plaque de base (17) et l'empilage de tôles statoriques (3).

10. Machine à traction électrique (1) sans boîtier selon l'une des revendications 1 à 9, **caractérisée en ce que** les plaques de pressage (7, 8) se présentent essentiellement sous forme rectangulaire.

11. Machine à traction électrique (1) sans boîtier selon les revendications 1 à 10, **caractérisée en ce que** le fluide de refroidissement (K) est constitué d'eau de refroidissement.

12. Machine à traction électrique (1) sans boîtier selon l'une des revendications 1 à 11, **caractérisée en ce qu'**un embrayage (21) est agencé du côté entraînement (A) de l'arbre de rotor (4) pour assurer la liaison avec une transmission (22), de préférence un embrayage à dents courbées (23).

13. Machine à traction électrique (1) sans boîtier selon l'une des revendications 1 à 12, **caractérisée en ce qu'**au moins un palier (24) dans au moins un flasque (29, 30) est constitué d'un roulement à billes à contact oblique (25).

14. Machine à traction électrique (1) sans boîtier selon l'une des revendications 1 à 13, **caractérisée en ce qu'**au moins un tube caloporteur (26) à extrémité libre ou en liaison avec un dissipateur thermique (27) est agencé dans l'empilage de tôles rotoriques (6) pour refroidir le rotor (3).
